Europäisches Patentamt

European Patent Office

Office européen des brevets

(19)

(11) Veröffentlichungsnummer: **0 151 474 B1**

## (12) EUROPÄISCHE PATENTSCHRIFT

(45) Veröffentlichungstag der Patentschrift: 31.07.91

(51) Int. Cl.⁵: **G01N 21/35**

(21) Anmeldenummer: 85101058.7

(22) Anmeldetag: 01.02.85

Die Akte enthält technische Angaben, die nach dem Eingang der Anmeldung eingereicht wurden und die nicht in dieser Patentschrift enthalten sind.

(54) Vorrichtung zur photoakustischen Detektion von Gasen.

(30) Priorität: 07.02.84 CH 572/84
28.05.84 CH 2594/84
06.09.84 CH 4249/84

(43) Veröffentlichungstag der Anmeldung:
14.08.85 Patentblatt 85/33

(45) Bekanntmachung des Hinweises auf die Patenterteilung:
31.07.91 Patentblatt 91/31

(84) Benannte Vertragsstaaten:
AT BE CH DE FR GB IT LI LU NL SE

(56) Entgegenhaltungen:
WO-A-82/02950
DE-A- 2 643 414
US-A- 4 197 369

REVIEW OF SCIENTIFIC INSTRUMENTS, Band 52, Nr. 9, September 1981, Seiten 1306-1310, American Institute of Physics, New York, US; D. CAHEN: "Photoacoustic cell for reflection and transition measurements"

PATENTS ABSTRACTS OF JAPAN, Band 4, Nr. 82 (P-15)[564], 13. Juni 1980; & JP-A-55 47 436 (FUJI DENKI SEIZO K.K.) 03-04-1980

(73) Patentinhaber: OEHLER, Oscar, Dr.
Streulistrasse 24
CH-8032 Zürich(CH)

(72) Erfinder: Oehler, Oskar
Streulistrasse 24
CH-8032 Zürich(CH)
Erfinder: Mosbach, Klaus
Rebbergstrasse 83
CH-8102 Oberengstringen(CH)
Erfinder: Seifert, Martin
Elionorenstrasse 16
CH-8032 Zürich(CH)
Erfinder: Kunz, Heinrich
Konradstrasse 28
CH-8005 Zürich(CH)
Erfinder: Kuster, Niels
Bodmerstrasse 6
CH-8002 Zürich(CH)

(74) Vertreter: Frei, Alexandra Sarah
Frei Patentanwaltsbüro Hedwigsteig 6 Postfach 95
CH-8029 Zürich(CH)

HELVETICA PHYSICA ACTA, Band 54, 1981, Seiten 631-636; O. OEHLER et al.: "A simple photoacoustic gas-detection system"

**Beschreibung**

Die Erfindung liegt auf den Gebieten der photoakustischen Spektroskopie, der Akustik, der Elektronik, und zusätzlich der Biosensor-Technologie.

Sie betrifft ein Verfahren und eine Vorrichtung zur Detektion von Gasen, die allenfalls in einer Flüssigkeit gelöst resp. als Kondensat mit ihr vermischt sind. Die Gase können allenfalls aus einer biologischen Reaktion hervorgehen. Die Detektion der Gase resp. Dämpfe beruht auf dem photoakustischen Effekt. Beschrieben ist ebenfalls eine Vorrichtung zur Erfassung der entsprechenden elektrischen Signale.

Es besteht zweifellos ein grosses Interesse für einfache Vorrichtungen zum zuverlässigen und selektiven Nachweis von Gasen. Solche Gase können direkt als Komponenten einer Gasmischung - wie etwa Luft - vorhanden sein, aus einem biologischen Gewebe - wie etwa aus einem photosynthetisierenden, pflanzlichen Blatt - austreten, oder beispielsweise aus einer biologischen Reaktion hervorgehen.

Die biologisch aktiven Systeme können lebende Organismen, wie Bakterien oder biologisch aktive Extrakte aus biologischen Proben, beispielsweise Enzyme, sein.

Das biologisch aktive System ist meistens in der Flüssigkeit - vornehmlich Wasser - suspendiert oder er ist auf einem Träger, zum Beispiel auf einer Kunststoff-, Metall- oder Glasoberfläche immobilisiert.

Es gibt allerdings auch mikrobiologische Systeme, wie Enzyme und Bakterien, die an der Luft reaktionsfähig sind. Dieselben können entweder als Aerosol vorliegen oder, wie erwähnt, auf einem Träger immobilisiert sein.

Wird ein Substrat beigefügt, das durch das biologisch aktive System abgebaut werden kann, so können gasförmige Produkte entstehen. Das produzierte Gas ist dann ein Mass für die Aktivität des biologischen Organismus oder des bioaktiven Extraktes.

Zusätzlich kann aufgrund der Gasproduktion eine Aussage über die Konzentration des Substrates gemacht werden. Da im allgemeinen biologische Reaktionen hochspezifisch und selektiv verlaufen, bietet sich die Möglichkeit, aufgrund der Bestimmung der produzierten Gase eindeutige und qualitative Angaben über die Substrate zu machen. Vorrichtungen, die nach diesem Prinzip arbeiten, fallen unter den Begriff der Biosensoren. Es stellt sich das Problem, die Umsetzungs-Produkte zu detektieren, d.h. ein elektrisches Signal zu erzeugen, dessen Grösse in Beziehung zur Konzentration der gelösten Gase steht.

Zur Detektion von Gasen kommen einerseits chemische Methoden in Frage, wie Titration, Kolorimetrie, gravimetrische Bestimmung von Ausfällungen, andererseits rein physikalische Methoden, wie etwa optische Spektroskopie, Massenspektrometrie, usw.

Die chemischen Methoden sind zwar in der Regel einfach bezüglich des apparativen Aufwandes; sie eignen sich aber wegen der Komplexität des Reaktionsablaufes, beispielsweise Reagenzienzuführung, Abtrennung durch Filtration usw., weniger für automatisch gesteuerte Messungen.

Zudem kann es erforderlich sein, dass die Vorrichtung, in dem der biologische Abbau stattfindet - der sogenannten Bioreaktion - vom chemischen Reaktor sorgfältig abgetrennt sein muss, um Vergiftungen der bioaktiven Systeme durch Chemikalien zu verhindern.

Ein weiterer ungünstiger Moment bei chemischen Bestimmungen ist der Zeitaufwand, der für die chemische Umsetzung und allenfalls für die Messproben-Aufbereitung notwendig ist.

Aus diesen genannten Gründen ist einer physikalischen Bestimmung von gasförmigen biologischen Reaktionsprodukten an sich der Vorzug zu geben. Leider sind entsprechende Methoden meistens mit sehr grossem apparativem Aufwand verbunden. Ins Gewicht fällt dieses Argument vor allem, wenn an spektroskopische Methoden gedacht wird.

Allerdings ist festzuhalten, dass sich die optisch-spektroskopischen Methoden durch grosse Zuverlässigkeit und Selektivität auszeichnen. Aus diesem Grunde soll darauf näher eingegangen werden.

Die folgenden Spektralbereiche kommen für die optisch-spektroskopische Detektion von biologischen Produkten in Frage:
- Ultravioletter und sichtbarer Bereich (18Ø - 8ØØ nm) - Infrarotbereich (Ø.8 um - 2Ø $\mu$m).

Im ultravioletten und allenfalls im sichtbaren Spektralbereich besitzen die in Frage kommenden Moleküle in der Regel breitbandige und wenig spezifische Absorptionsstrukturen. Abgesehen von Ausnahmefällen dürfte dieser Spektralbereich daher im allgemeinen nicht sehr wichtig sein.

Was den selektiven Nachweis betrifft, kommt hingegen dem infraroten Spektralgebiet besondere Bedeutung zu. Vor allem im Bereich von 1Ø $\mu$m besitzen viele organische Moleküle sehr spezifische Absorptionslinien (Fingerprint-Gebiet).

Ein wesentlicher Nachteil der infrarot-spektroskopischen Analysenmethoden ist es aber, dass Untersuchungen in wässriger Lösung kaum durchgeführt werden können, da das Wasser fast über den gesamten wichtigen Infrarot- Spektralbereichbereich verteilt, sehr starke, alles überragende Absorptionslinien besitzt. Für Infrarot-Untersuchungen werden daher organische Stoffe meistens in organischen Lösungsmitteln gelöst oder zu Aufschlämmungen verarbeitet.

Diese Möglichkeit ist für die Untersuchung von Substanzen, die aus biologischen Reaktionen hervorgehen, in der Regel ungeeignet, da biologische Reaktionen, von wenigen Ausnahmen abgesehen, im Wasser verlaufen und demzufolge auch die Reaktionsprodukte als wässrige Lösung oder Suspension vorliegen.

Die infrarot-spektroskopische Detektionsmethode erfordert daher fast unumgänglich eine Abtrennung des Wassers vom Reaktionsprodukt. Letzteres kann getrocknet werden und entweder - wie bereits erwähnt - mit einem organischen Lösungsmittel versetzt oder vermischt mit einem anorganischen Salz, wie KBr, zu einer Pille gepresst werden.

Die Abtrennung des Reaktionsproduktes vom Wasser ist in jedem Falle umständlich und aufwendig. Vor allem für automatische Detektoren dürfte diese Methode ungünstig sein. Relativ leicht lässt sich ein Reaktionsprodukt mit hohem Dampfdruck, wenigstens teilweise - vom Wasser aufgrund des Gas-/Flüssigkeits-Gleichgewichtes trennen. Es muss in diesem Falle lediglich die Störung durch den Wasserdampf verhindert werden.

Zur optisch-spektrokopischen Detektion von Gasen und Dämpfen stehen zwei verschiedene Wege offen: Einerseits die direkte Extinktionsmethode und andererseits die photoakustische Methode.

Die Extinktionsmethode besteht darin, dass die Lichtintensität vor (Io) und nach (I) der Gasabsorptionsküvette gemessen wird. Aus der Differenz (Io-I) der beiden Messungen kann auf die Konzentration des lichtabsorbierenden Gases geschlossen werden. Diese Methode erlaubt die Analyse im strömenden Gas. Sie eignet sich aber nur für die Bestimmung relativ hoher Gaskonzentrationen, es sei denn, dass grosse Küvettenlängen oder Mehrfach-Reflexionszellen in Kauf genommen werden. Bei letzteren ist es einerseits notwendig, dass der einfallende Lichtstrahl eng gebündelt ist - allenfalls kann der Divergenz des Strahles durch spezielle Spiegelform entgegengewirkt werden - andererseits muss das Spiegelsystem sehr genau adjustiert sein. Mehrfach-Reflexionszellen sind daher in der Regel recht aufwendig.

Will man eine zuverlässige Messung durchführen, so muss sich die Lichtabschwächung (Io - I)/Io innerhalb gewisser Schranken bewegen. Ein unterer Grenzwert von 1 % und eine obere Limite von 99 % bedeutet, dass an die Stabilität von Lichtquelle und Lichtdetektoren keine gravierenden Ansprüche gestellt werden müssen. Diesen Schranken ist die optische Weglänge der Gasküvette anzupassen.

Für den Nachweis niedrig konzentrierter, atmosphärischer Gasverunreinigugen, wie etwa CO oder CH4, hat sich die photoakustische Gasdetektionsmethode sehr gut bewährt. Dieselbe besteht darin, dass die Druckänderungen, die in einer Gasmischung bei Absorption von monochromatischem, intensitätsmoduliertem Licht (vornehmlich Infrarotstrahlung) durch eine Gaskomponente entstehen, durch ein Mikrophon erfasst werden, wie das etwa in einem Artikel von L.G. Rosengren (Appl. Optics, 14, 1960 (1975)) nachzulesen ist. Zu diesem Zweck werden meistens intensive, abstimmbare Infrarotlaser zusammen mit hochempfindlichen Kondensator-Mikrophonen eingesetzt.

Dieses Messverfahren ist überaus empfindlich. So konnte beispielsweise L.B. Kreuzer (J. App. Phys. 42, 2934 (1974)) Methan in Stickstoff in einer Konzentration von 10ppb (10E-8) mit Hilfe eines 16 mW-Lasers nachweisen.

Unter der Annahme wesentlich schwächerer Anforderungen an die Empfindlichkeit der Gasdetektion lässt sich das Nachweissystem stark vereinfachen. Insbesondere kann der kostspielige, abstimmbare Infrarotlaser durch ein einfaches System, bestehend aus einem Glühkörper und einem Schmalband-Interferenzfilter, ersetzt werden. In neuerer Zeit ist von M.J.D. Low and G.A. Parodi (Infrared Phys. 20, 333 (1980)) zwar ein auf dem photoakustischen Effekt beruhendes Infrarot-Spektrometer beschrieben worden, bei dem statt des Lasers ein Glühstift verwendet worden ist. Diese Quelle hat sich allerdings wegen ihrer Intensitätsschwäche in Kombination mit einem Gitter-Monochromator für ein photoakustisches Infrarot-Spektrometer nicht gut bewährt.

Für die Intensitätsmessung bringt der Einsatz des Gittermonochromators durch ein Interferenzfilter Vorteile, allerdings auf Kosten von Flexibilität und Genauigkeit.

Eigene Messungen zeigten, dass bezüglich der Empfindlichkeit recht gute Resultate erzielt werden können. So konnte unter Verwendung einer bei 5.6W elektrischer Leistung mechanisch modulierten thermischen Strahlungsquelle und einem Interferenzfilter als Monochromator (Lichtleistung 2.6 $10^{-5}$ $\Delta\nu$W. cm) CO2 in N2 bei einer Konzentration von 1.5 ppm zuverlässig nachgewiesen werden, wie das im Artikel von O. Oehler, D. Marek und A. Fries (Helv. Phys. Acta, 54, 631, (1981)) festgehalten ist.

In gewissem Sinne ist es erstaunlich, dass diese Methode ohne Laser auskommen kann. Es sei in diesem Zusammenhang aber festgehalten: Mit Laserstrahlung kann in der Regel nur eine einzige scharfe Rotationslinie des komplexen Vibrations-Rotationsspektrums eines niedrig-molekularen Gases angeregt werden. Die Kombination thermische Strahlungsquelle und Interferenzfilter erlaubt es hingegen, das Absorptions-Bandensystem als Gesamtheit anzuregen. Da der photoakustische Effekt proportional zur totalen absorbierten Lichtleistung ist, ist es einleuchtend, dass man selbst unter Verwendung einer intensitätsschwachen Breitband-Lichtquelle zu einem guten Resultat kommen kann.

Es ist allerdings darauf zu achten, dass das Licht möglichst effizient in eine Detektor-Gasküvette von kleinem Volumen V konzentriert werden kann, da die Dichte L/V der in der Küvette absorbierten Lichtleistung L für die Grösse des photoakustischen Signals massgebend ist. Die Proportionalität zwischen photoakustischem Signal und Lichtintensität bedeutet, dass an die Intensitätsstabilität der Lichtquelle - im Gegensatz zur Situation bei der Extinktionsmethode - keine grossen Anforderungen gestellt werden müssen.

Bei einer Kategorie von Gasanalysatoren, die auf dem photoakustischen Effekt beruhen, ist der Infrarotlaser erfolgreich durch einen Glühkörper ersetzt. Es handelt sich um die sogenannten nicht-dispersiven photoakustischen Gasanalysatorsysteme, die in vielfältigen Konstruktionen vorliegen. Es sei in diesem Zusammenhang etwa auf die deutschen Patentschriften von O.H. Blunck (Nr. 2751047) und von U. Deptolla, F. Fabinski (Nr. 2748089) hingewiesen.

Bei diesen nichtdispersiven Systemen gibt nicht die absorbierte Lichtmenge, welche von der dem Filter angepassten Gaskomponente absorbiert wurde, direkt zum Mikrophonsignal Anlass, sondern es wird die Differenz der Lichtabschwächung zwischen Probegas und einem Referenzgas selektiv mittels eines aufgespaltenen Lichtstrahles gemessen. Die gasselektive Lichtintensitäts-Differenzmessung wird mit einer photoakustischen Differenzmesszelle bestimmt, die mit Gas der zu untersuchenden Komponente gefüllt ist. Diese Konstruktion hat den Vorteil, dass keine monochromatische Strahlung erforderlich ist. Andererseits erlaubt eine entsprechende Apparatur jeweils nur die Bestimmung einer einzigen Gasart. Zudem sind solche Systeme im Aufbau kompliziert, da im Zusammenhang mit der Differenzsignalmessung die beide Lichtstrahlanteile sehr genau kompensiert sein müssen.

Zusammenfassend lässt sich erwähnen, dass optisch-spektroskopische Gasdetektionsverfahren fast durchwegs mit erheblichem Aufwand verbunden sind. Es soll aber eine einfache Detektions-Vorrichtung für in Flüssigkeit gelöste Gase geschaffen werden. Dieser Forderung wird das photoakustische Messprinzip bei Verwendung eines thermischen Strahlers gerecht, wie im Artikel von O. Oehler und D. Sourlier (Helv. Phys. Acta, 55, 594-597 (1982) nachgelesen werden kann.

Der photoakustische Effekt beruht darauf, dass das Schallfeld gemessen wird, das in der Gasküvette durch die Absorption von intensitäts-modulierter Lichtstrahlung entsteht. Damit ist eine photoakustische Messvorrichtung zum vorherein empfindlich gegenüber akustischen Störungen. Es ist daher unumgänglich, dass entsprechende schalldämpfende Massnahmen getroffen werden:

Während der Messung muss einerseits verhindert werden, dass sich das lichtabsorptionsbedingte Schallsignal durch Entweichen von Gas aus der photoakustischen Zelle abschwächt, andererseits muss das Eindringen von externem Raumschall, der den Rauchpegel der Messung heraufsetzen könnte, verhindert werden.

Falls bei hoher Lichtmodulationsfrequenz gearbeitet wird, ist es allenfalls möglich, mit einfachen Strömungswiderstände darstellenden Elementen, wie Blenden, usw. auszukommen. Bei tiefer Modulationsfrequenz ist es aber unumgänglich, effiziente Schalldämpf-Vorrichtungen einzusetzen. Der Betrieb eines photoakustischen Gasdetektors bei tiefer Modulationsfrequenz ist aber von besonderer Bedeutung, da entsprechende Vorrichtungen wenig Aufwand erfordern. Allenfalls kann die Lichtquelle sogar thermisch durch Ein- und Ausschalten des Lichtquellenstromes moduliert werden, was sicherlich gegenüber der Lichtunterbrechung mit einem mechanischen Hilfsmittel - beispielsweise einer rotierenden Lochblendenscheibe - eine besonders einfache und zuverlässige Lösung darstellt. Normalerweise wird mit vollständig verschlossenen photoakustischen Gasdetektor-Küvetten gearbeitet.

Sehr einfache Lösungen für die akustische Abtrennung der Zuleitungen sind in den Patentanmeldungsschriften von Dehler et al. WO-A-8202950 (PCT/CH82/00026) und WO-A-8400217 (PCT/CH83/00080) beschrieben worden. Sie beruhen auf einer hydrodynamischen akustischen Abkopplung. Dabei wird von der Tatsache ausgegangen, dass Luft und flüssige Medien sehr unterschiedliche Schallhärten ($h = E$ , E:Elastizitätsmodul, :Dichte) besitzen und demzufolge die akustische Leistungsanpassung an den Gas-Flüssigkeits- und Flüssigkeits-Gas-Schnittstellen sehr schlecht ist. Im menschlichen Ohr beispielsweise, wo dieses Problem bei der Schallübertragung von äusseren Ohr auf die Gehörflüssigkeit des Innenohrs auch auftritt, wird die erforderliche gute Leistungsanpassung durch die Gehörknöchelchen im Mittelohr gewährleistet. Der unterschiedlichen Schallhärte von Luft und Gehörflüssigkeit wird mit einer mechanischen Uebersetzung (Uebersetzungsverhältnis 60:1) Rechnung getragen.

Die eine akustische Abtrennvorrichtung besteht darin, dass zu beiden Seiten des photoakustischen Gasdetektors ein flüssigkeitsgefülltes, gaswaschflaschenähnliches Tauchgefäss angebracht ist. Durch einen kleinen Ueberdruck, der sich beispielsweise mittels einer Membranpumpe erzeugen lässt, wird Gas durch die Flüssigkeit geblasen und somit der Austausch des Gases in der Zelle vollzogen. Während dieses Vorganges kann zwar keine photoakustische Messung durchgeführt werden. Das typische Geräusch, das beim Durchblasen des Gases durch die Flüssigkeit entsteht, würde die Messung zu stark stören.

Wird die Pumpe abgestellt, so beruhigt sich der Flüssigkeitsspiegel und damit ist die akustische Entkoppelung gewährleistet. Messungen ergaben im 10-100 Hz-Frequenzbereich eine akustische Dämpfung von 40-55dB.

Eine zweite Ausführung der akustischen Abtrennvorrichtung besteht darin, dass die Abtrennflüssigkeit durch Kapillarkräfte in engen Röhrchen festgehalten wird. Unter einem kleinen Ueberdruck wird die Flüssigkeit aus den Kapillaren ausgetrieben, somit ist der Gasaustausch gewährleistet. Beim Abschalten der Pumpe dringt die Flüssigkeit in die Kapillaren zurück: das Ventil ist akustisch verschlossen.

Die akustische Dämpfung dieser Vorrichtung ist recht gross: Im Frequenzbereich 10-100 Hz wurden Werte von 60-70 dB gefunden.

An sich ist es denkbar, dass das zu detektierende Medium (Gas oder Dampf) abgesaugt und zur optisch-spektroskopischen Untersuchung der photoakustischen Zelle zugeführt wird. Diese Methode ist durchaus in Betracht zu ziehen, wenn die Verbindungsvorrichtungen zwischen Gasentnahme resp. Gasauffangsstelle und der Detektionszelle geometrisch klein bemessen werden können, so dass ein rascher Gastransfer möglich ist.

Anzustreben ist aber ein möglichst enger Kontakt zwischen Entnahme-/Auffangsstelle und dem Gasdetektor.
Es ist Aufgabe der Erfindung, eine Vorrichtung zu schaffen, mit deren Hilfe Gase oder Dämpfe, die allenfalls aus einer Flüssigkeit oder einem festen Messgut entweichbar sind, mittels der photoakustischen Methode auf äusserst einfache und preisgünstige Weise detektierbar sind.

Diesem Anliegen wurde in einer weiteren Ausführung der akustischen Abtrennung der photoakustischen Zelle Rechnung getragen.

Eine solche Ausführung der akustischen Abtrennung ist in den prioritätsbegrundenden Schweizer Patentanmeldeschriften Nr. 572/84-1 vom 7. Februar 1984 und Nr. 2594/84 vom 28. Mai 1984 festgehalten.

Der Innenraum des photoakustischen Gasdektors ist gegenüber der, die Gasauffangsstelle darstellenden, Aussenwelt durch eine gaspermeable Membrane abgetrennt. Trotz ihrer Gasdurchlassfähigkeit stellt eine solche Membrane eine genügend grosse akustische Dämpfung zur Gewährung einer photoakustischen Messung dar.

Diese Anordnung führt zu einer besonders einfachen Gasdetektionsvorrichtung, indem der Gasaustausch zwischen Gasauffangsstelle und dem photoakustischen Gasdetektor keine Pumpe erfordert, sondern rein passiv durch Gasdiffusion durch die Membrane erfolgt.

Es hat sich als günstig erwiesen, wenn möglichst kein Licht des Messstrahles auf die gaspermeable Membrane fällt. Bei Membran-Beleuchtung tritt auch in Abwesenheit eines absorbierenden Gases im Detektorraum ein grosses photoakustisches Signal auf, das auf die Lichtabsorption in der Membrane zurückzuführen ist.

Es ist desweiteren festzuhalten, dass eine gaspermeable Membrane keinen idealen akustischen Widerstand darstellt - vor allem wenn bei tiefer Lichtmodulationsfrequent gearbeitet werden soll. In Uebereinstimmung mit Berechnungen ergaben sich für eine 0.9 cm³ fassende photoakustische Zelle, die durch eine gaspermeable Membrane mit 0.5 cm Durchmesser abgetrennt ist, bei 5 Hz, je nach Membrantyp, akustische Dämpfungsfaktoren von 5-30 dB.

Wesentlich bessere Resultate sind auch bei Ersatz der dünnen, flexiblen gaspermeablen Membrane durch ein starres, poröses Material, beispielsweise ein Sintergut, nicht zu erwarten.

Damit ist das photoakustisches Signal in der Regel klein und stark verrauscht. Diesen Nachteilen kann durch Verwendung einer intensiven, intensitätsmodulierten Lichtquelle sowie durch Einsatz eines sehr schmalbandigen elektronischen Filters begegnet werden.

Da der membran-entkoppelte photoakustische Gasdetektor eine äusserst einfache und preisgünstige Gasdetektionsvorrichtung darstellt, ist auch der Lichtquelle und deren Ansteuerung, sowie der Signalerfassungselektronik durch entsprechende Einfachheit Rechnung zu tragen. Solche Vorrichtungen sind in der prioritätsbegrundenden Schweizer Patentanmeldeschrift Nr. 4249/84-3 vom 6. September 1984 beschrieben.

Die im folgenden beschriebene Erfindung beruht auf einem photoakustischen Gasdetektor, der durch eine gaspermeable Membrane oder durch starres, poröses Material, beispielsweise Sintergut, von der Gasauffangsstelle akustisch abgetrennt ist, sowie auf den elektronischen Vorrichtungen zur Intensitätsmodulation der Lichtquelle und zur Erfassung des Mikrophonsignales.

Eine bevorzugte Ausführungsform soll die Gase resp. Dämpfe, die aus einem biologischen Gewebe austreten, resp. aus einer biologischen Reaktion hervorgehen, detektieren.

Die Aufgabe wird durch die in den Patentansprüchen definierte Erfindung gelöst.

Die Erfindung wird im folgenden anhand der beiliegenden Zeichnungen beschrieben.

Fig. 1
zeigt eine einfache photoakustische Detektionsvorrichtung für Gase mit akustischen Entkoppelungselementen und einer thermischen Lichtquelle.

Fig. 2
stellt eine auf dem hydrodynamischen Prinzip beruhende akustische Entkoppelungsvorrichtung dar.

Fig. 3
zeigt ein Beispiel eines möglichen Biosensors, der aus der Kombination eines Bioreaktors mit einer photoakustischen Gasdetektionsvorrichtung besteht. Eine gaspermeeable Membrane dient als Flüssigkeits-Gas-Schnittstelle.

Fig. 4
veranschaulicht die Abtrennung der Gasentnahmestelle von der photoakustischen Gasdetektionszelle durch eine gaspermeable Membrane oder ein starres, poröses Material.

Fig. 5
zeigt eine mögliche Anordnung eines Biosensors, bestehend aus einem gasdurchspülten Bioreaktor und einem photoakustischen Gasdetektors.

Fig. 6
repräsentiert eine einfache photoakustische Detektionszelle für gasförmige Komponente, wobei die akustische Entkoppelung der Zelle durch eine gaspermeable Membrane, oder ein starres, poröses Material gewährleistet ist.

Fig. 7 und Fig. 8
zeigen offene photoakustische Messvorrichtungen, die durch das Messgut selbst von der Umgebung akustisch entkoppelt sind.

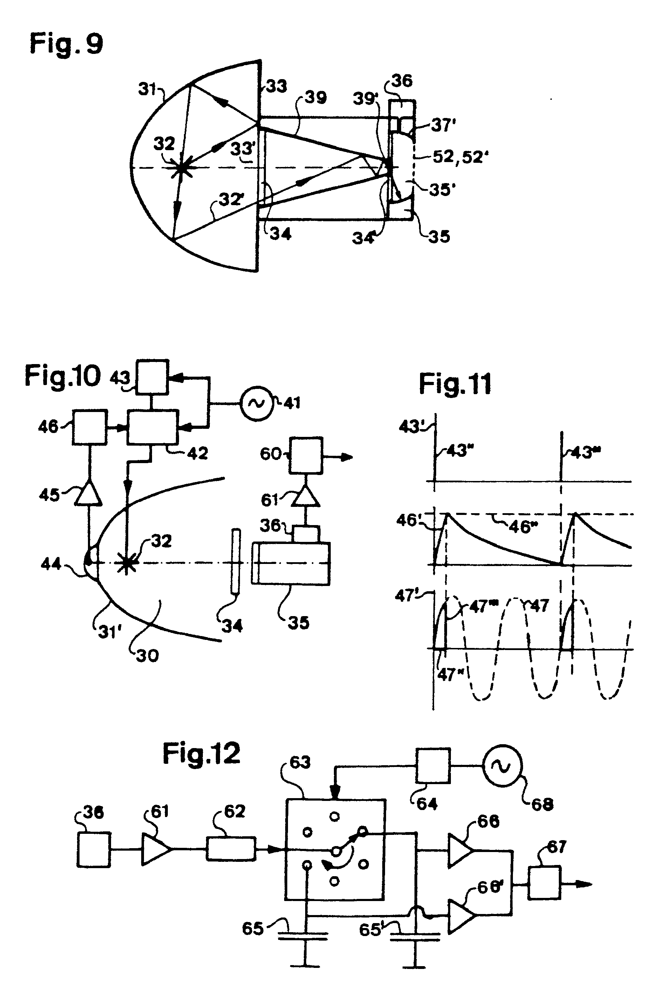

Fig. 9
zeigt die optische Vorrichtung, welche die Beleuchtung des gaspermeablen, akustisch dämpfenden Elementes weitgehend verhindert. Fig. 10 zeigt eine Darstellung der Vorrichtung zur thermischen Modulation eines Glühkörpers mittels einer Phasenanschnittschaltung.

Fig. 11
veranschaulicht den zeitlichen Ablauf der Funktionsweise der Phasenanschnitt-Vorrichtung von Fig. 10.

Fig. 12
zeigt eine Darstellung der Schaltung zur Erfassung und Analyse des stark verrauschten, einen periodischen Anteil enthaltenden, Mikrophonsignales mittels eines N-Pfadfilters.

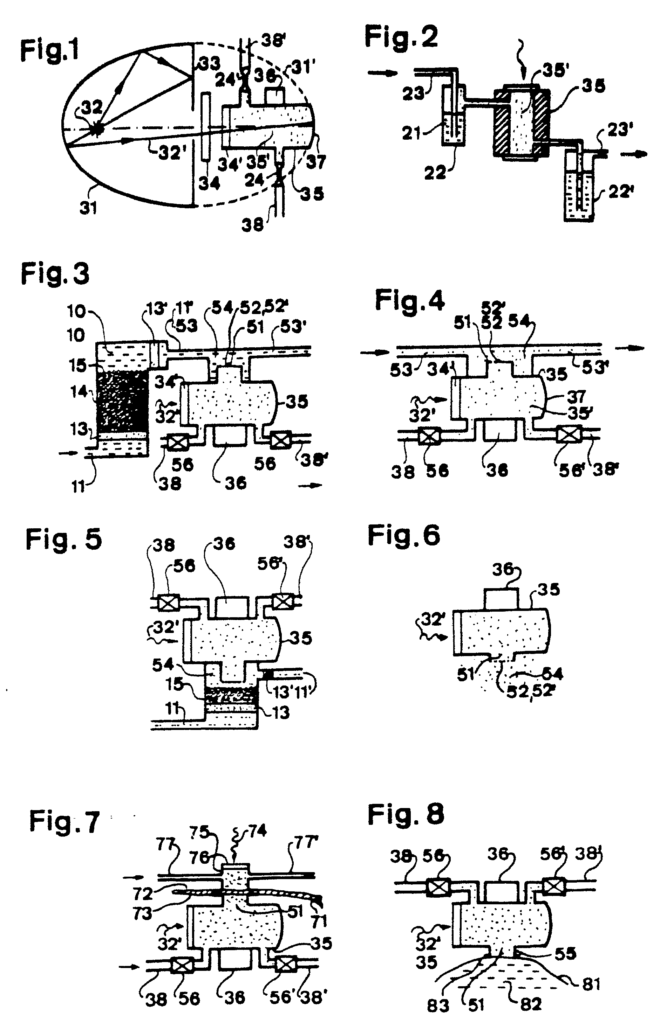

Fig. 1 zeigt eine einfache, auf dem photoakustischen Prinzip beruhende Gasmessvorrichtung mit thermischem Strahler 32. Die Funktionsweise dieser Vorrichtung wird im folgenden erläutert. Wesentlicher Bestandteil ist die optische Sammelvorrichtung. Dieser besteht aus einem ellipsoidförmigen Hohlspiegel 31, in dessen einem Brennpunkt sich ein optisch teilweise transparenter Strahler 32, beispielsweise eine Glühwendel, befindet.

In der mittelhalbierenden Ebene der Ellipsoidfläche 31 ist ein Gegenreflektor in Form eines Planspiegels 33 angebracht, der das auftreffende Licht direkt oder indirekt auf den Strahler 32 zurückwirft. Dieser Vorgang wiederholt sich, bis der Lichtstrahl, sich der Hauptachse zusehends nähernd, schliesslich durch die zentrale Lichtöffnung 33' im Planspiegel 33 ausgekoppelt wird. Der gebündelte Lichtstrahl 32' fällt zunächst auf ein optischer Bandpassfilter 34 und gelangt anschliessend durch das Fenster 34' in den photoakustischen Detektor 35. Falls der Lichtstrahl 32' intensitätsmoduliert ist, was beispielsweise durch alternierendes Ein- und Ausschalten des Strahlers 32 möglich ist, so bewirkt die vom Gas im photoakustischen Gasdetektor 35 absorbierte Strahlung periodische Druckschwankungen, die mit dem Mikrophon 36 detektiert werden. Zur Verlängerung des Lichtweges ist es sinnvoll, an der Rückwand des photoakustischen Gasdetektors 35 einen ebenen oder gekrümmten Lichtreflektor anzubringen. Besonders günstig ist ein Hohlspiegel 37, wie er in Fig. 1 abgebildet ist, welcher der Form der substituierten Ellipsoidhälfte 31' angepasst ist. Damit kann erreicht werden, dass der nicht-absorbierte Anteil der in den photoakustischen Gasdetektor 35 fallenden Strahlung ohne Veränderung des Strahlenganges in den Ellipsoidreflektor 31, 33 zurückgeworfen wird. Die Folge ist eine Erhöhung des optischen Wirkungsgrades der optischen Sammelvorrichtung.

Die Füllung des photoakustischen Gasdetektors 35 mit dem zu untersuchenden Gas erfolgt über die Gas-Zuleitungs- resp. -Ableitungsstutzen 38, 38' und die mit Absperrflüssigkeit gefüllten Lichtdetektoren 24, 24'. Die Funktionsweise dieser zugleich als akustische Entkopplung dienenden Gas-Austausch-Vorrichtungen wurde bereits erläutert.

Fig. 2 zeigt eine Darstellung der ebenfalls erwähnten akustisch entkoppelnden Gasaustauschvorrichtungen mit gaswaschflaschenähnlichen, mit der Absperrflüssigkeit 21, gefüllten Tauchgefässen 22, 22'. Der Gasaustausch im photoakustischen Detektor erfolgt über die Gas-Zuführungs- und -Ableitungsstutzen 23 resp. 23'.

Fig. 3 ist die Darstellung der Kombination eines chemischen Reaktors 10', insbesondere eines Bioreaktors 10, mit einem photoakustischen Gasdetektor 35. Reaktor 10' und der Detektor 35 stehen miteinander über dem Gasdurchtritt 51 in Verbindung. Letzterer ist mit einer flüssigkeitsabtrennenden, gaspermeablen Membrane 52 versehen.

Die Funktionsweise des Bioreaktors 10 ist die folgende:
Eine Flüssigkeit, beispielsweise Wasser, welche die zu analysierende Ausgangssubstanz in gelöster oder suspendierter Form enthält, wird über den Reaktorzuleitungstuten 11 einem gas-/oder dampferzeugenden Element 10' beispielsweise dem Bioreaktor 10 zugeführt. Der Flüssigkeitsstrom wird entweder hydrostatisch durch einen Flüssigkeitsspiegelunterschied oder mittels einer Pumpvorrichtung aufrecht erhalten. Die Flüssigkeit, die ein Substrat in gelöster oder suspendierter Form enthalten kann, gelangt durch die permeable Reaktortrennfläche 13, die beispielsweise aus einer Glasinterscheibe bestehen kann, in den Reaktionsraum 14. In diesem Reaktionsraum 14 befindet sich beispielsweise die bioaktive Substanz, zum Beispiel Bakterien, resp. ein oder mehrere Enzyme. Die bioaktive Substanz ist entweder im Reaktorraum frei beweglich, oder auf einem Träger, beispielsweise porösen Glaskugeln (15), Kunststoffen, keramischem Material oder Metall geeigneter Form immobilisiert. Der Immobilisierung des bioaktiven Systems auf einem Träger ist günstig, da die fixierten Substanzen gegenüber den freien stabiler sind und eine grössere Lebensdauer haben. Zudem wäre eine zuverlässige Abtrennung der bioaktiven Substanz bei gleichzeitiger effizienter Umwälzung der Flüssigkeit durch die Reaktorabtrennfläche 13, 13' problematisch. Im Reaktorraum 14 findet der biologische Abbau des Substrates, welches der Flüssigkeit beigesetzt ist, statt. Es werden aufgrund eines teilweisen oder vollständigen biologischen Abbaues die biologischen Reaktionsprodukte, beispielsweise in Form von gelösten Gasen, wie etwa $CO_2$, $NH_3$, $H_2$, gebildet.

Die Reaktionsprodukte verlassen mit der Flüssigkeit durch die andere Reaktorabtrennfläche 13' über den Reaktor-Ableitungsstutzen 11' den Reaktor 10'.

Da biologische und chemische Reaktionen eine grosse Temperaturabhängigkeit aufweisen, ist eine Thermostatisierung des Reaktorraumes allenfalls angezeigt. Die Temperaturkonstanthaltung kann beispielsweise mit einem Flüssigkeitsmantel gewährleistet werden.

Diese gas- resp. dampfangereicherte Flüssigkeit gelangt anschliessend über den Zuleitungsstutzen 53 an die Gasauffangsstelle 54, die mit dem photoakustischen Gasdetektor 35 über den membran-abgedeckten, 52, oder mit einem starren, porösen Material 52' versehen, Durchtritt 51 verbunden ist. Die gas-/dampfabgereicherte Flüssigkeit verlässt die Gasauffangsstelle 54 anschliessend über den Ableitungsstutzen 53'. Die Funktionsweise der gaspermeablen Membrane 52, in Kombination mit der Gasdetektionsvorrichtung 35', wie sie in Fig. 3 dargestellt ist, lässt sich wie folgt beschreiben:
Die Verbindung des photoakustischen Detektors 35 über das flüssigkeitsabtrennende, gaspermeable Element, 52, 52', beispielsweise die gaspermeable Membrane 52, ist sinnvoll, da einerseits eine Flüssigkeits-Gas-Trennfläche wegen der erwähnten Verschiedenheit der akustischen Impedarz der beiden Medien eine gewisse akustische Entkopplung darstellt. Andererseits wirkt bereits eine sehr dünne, gaspermeable Membrane 52, die am Durchtritt 51 der Wandung der photoakustischen Zelle angebracht ist, selbst bei tiefer Lichtmodulationsfrequenz (4-20Hz) als recht effiziente akustische Entkopplung
Die flüssigkeitsgefüllte Gasauffangsstelle 54 befindet sich beispielsweise oberhalb des gasenthaltenden photoakustischen Gasdetektors 35 und ist mit letzterem über den Gasdurchtritt 51 verbunden. Die Flüssigkeits-Gas-Abtrennung geschieht, wie erwähnt, beispielsweise durch die gaspermeable Membrane 52.

Falls der photoakustische Gasdektor 35 mit keinen Gaszuleitungen versehen ist, muss mit der Gas-Konzentrationsbestimmung nach einem Flüssigkeitswechsel über die Stutzen 53, 53' gewartet werden, bis sich das Gleichgewicht zwischen den Gas- und Flüssigkeitsphasen neu eingestellt hat. Kann hingegen im photoakustischen Gasdetektor 35 zusätzlich über die Stutzen 38, 38' und Ventile 56, 56' - allenfalls, hydrodynamischer Art 24, 24' oder 22, 22' - ausgetauscht werden, so muss die Einstellung des Gas- Flüssigkeits-Gleichgewichts nicht abgewartet werden. Falls beispielsweise das optische Absorptionsspektrum des Spülgases mit demjenigen des zu untersuchenden Messgases nicht interferiert, so kann nach Abschalten des Spülgasstromes aus dem Anstieg des Messgas-Partialdruckes zuverlässig auf die Konzentration des Messgases in der Flüssigkeit geschlossen werden.

Der photoakustische Messvorgang mit Hilfe des Mikrophons 36 wurde bereits beschrieben. Es sei in diesem Zusammenhang auf Fig. 1 hingewiesen. Das durch das Fenster 34' eingekoppelte intensitätsmodulierte Licht muss allerdings nicht notwendigerweise aus einem thermisch moduliertem Strahler 32 mit elliptischem Reflektor 31, 33 nach Fig. 1 stammen, sondern es könnte auch eine andere Infrarot- Lichtquelle beispielsweise eine thermische Lichtquelle zusammen mit einem anderen Reflektor, oder beispielsweise ein Laser Verwendung finden. Bezüglich Einfachheit und Effizienz dürfte aber der in Fig. 1 dargestellte elliptische Reflektor 31, 33, allenfalls unter Ersatz der thermischen Modulation des Strahlers 32 durch eine mechanische Modulationsvorrichtung, eine gut geeignete Lösung darstellen.

Fig. 4 zeigt die Gasdetektionsvorrichtung mit der akustisch dämpfenden, gaspermeablen Membrane 52 oder dem starren, porösen Material 52', beispielsweise Sintergut. Die Vorrichung stellt eine leichte Modifikation der eben besprochenen Vorrichtung dar, wie sie in Fig. 3 dargestellt ist. Sowohl Messungen als auch Berechnungen haben nämlich gezeigt, dass eine gaspermeable Membrane 52 allein, auch ohne ihre gleichzeitige Funktion als Gas-/ Flüssigkeits-Abtrennung eine für photoakustische Messungen hinreichend gute akustische Entkopplung darstellt. Damit ist es möglich, nicht nur die in einer Flüssigkeit gelösten, sondern auch in einer Gasmischung vorhandenen Gaskomponenten, beispielsweise mittels einer membranabgetrennten 52, photoakustischen Detektors 35 zuverlässig nachzuweisen. Es ist allerdings festzuhalten, dass die Geometrie der Membrane 52, oder des starren, gaspermeablen Materials 52', resp. deren Kapillarstruktur, einen sehr wesentlichen Einfluss auf die Verwendbarkeit als akustisch entkoppelndes Element 52, 52', 73, 81 hat. (Eine asymmetrische Membrane, die mit einer 10 nm dicken Trennhaut versehen ist, welche ihrerseits 2 nm - Kapillaren einer Dichte von 4 · 1012/cm2 aufweist, stellt beispielsweise eine akustische Dämpfung von 34.7 dB dar - ein Wert, der den gestellten Anforderungen durchaus genügt). Die Gasdetektionsvorrichtung von Fig. 4 unterscheidet sich von der Anordnung von Fig. 3 dadurch, dass an der Gasauffangsstelle 54 nicht notwendigerweise eine - die akustische Entkopplung des photoakustischen Gasdetektors 35 erhöhende - Flüssigkeit, sondern auch ein Gas vorhanden sein darf, das die gaspermeable Membrane 52 oder das starre, poröse Material 52' durchdringen kann. Die Information über die Messgaskonzentration an der Gasauffangsstelle 54 folgt beispielsweise aus der Gleichgewichts - Messgaskonzentration im photoakustischen Detektor 35'. Wie bereits beschrieben, ist es möglich, die Messgaskonzentration indirekt zu ermitteln. Zu diesem Zweck wird beispielsweise zunächst der photoakustische Gasdetektor 35 mit einem, mit dem zu messenden Gas optisch nicht interferierenden, Gas gespült. Anschliessend wird, wie ebenfalls erwähnt, die Gaskonzentration an der Gasauffangsstelle 54 auf Grund des Messgaskonzentrations-Anstieges im photoakustischen Gasdetektor 35 bestimmt.

Die Reaktionsprodukte, die beispielsweise aus einer biologischen Reaktion hervorgehen, werden nicht durch eine Trägerflüssigkeit, sondern allenfalls durch ein Trägergas zur Gasauffangsstelle 54 geführt. (Biologische Gasreaktionen sind möglich, wenn für die notwendige Feuchtigkeit im Bioreaktor 10 gesorgt wird. Allenfalls kann der Bioreaktor auch eine Flüssigkeit enthalten, wobei allerdings nicht notwendigerweise die Flüssigkeit, sondern nur die gasförmigen Reaktionsprodukte und allenfalls ein Trägergas, bis zur Gasauffangsstelle 54 gelangen).

Fig. 5 stellt eine leichte Modifikation der Vorrichtungen von Fig. 3 und Fig. 4 dar, indem die chemische oder allenfalls biochemische Reaktion direkt an der Gasauffangsstelle 54 stattfindet, also Reaktor 10' und Gasauffangsstelle 54 kombiniert sind. Eine weitere Möglichkeit besteht darin, dass das chemisch aktive - beispielsweise bioaktive - Material nicht auf einem Träger 15 immobilisiert, sondern direkt auf dem akustisch dämpfenden gaspermeablen Element, beispielsweise der gaspermeablen Membrane 52 aufgebracht ist.

Fig. 6 ist eine Darstellung einer einfachen Detektionsvorrichtung für Komponente des den photoakustische Gasdetektors 35 umgebenden Gases, beispielsweise der Raumluft. Die akustische Entkopplung des photoakustischen Gasdetektors 35 vom umgebenden, die Gasauffangsstelle 54 darstellenden, Gasraum ist wiederum durch ein akustisch dämpfendes gaspermeables Element, beispielsweise eine gaspermeable Membrane 52, beim Gasdurchtritt 51 gewährleistet. Falls kein Spülgas durch den photoakustischen Gasdetektor geleitet werden kann, wie das in Fig. 4 beispielsweise dargestellt ist, ist die Gaskonzentrationsbestimmung wegen der langsamen, diffusionsbedingten Einstellung des Gaskonzentrations-Gleichgewichtes im Gasdetektor 35 sehr träge. Allerdings ist diese Vorrichtung, wie aus Fig. 6 hervorgeht, äusserst einfach in ihrem Aufbau. Dem Nachteil der Messträgheit kann durch Miniaturisierung der photoakustischen Zelle - also durch Reduktion des Volumens - entgegengewirkt werden.

Fig. 7 und Fig. 8 stellen weitere, teilweise biologische Anwendungen dar. Bei der Anwendung, wie sie in Fig. 7 dargestellt ist, dient die Oberfläche eines photosynthetisierenden, pflanzlichen Blattes 71, das gegen den Durchtritt 51 des photoakustischen Detektors 35 gepresst wird, zugleich als akustisch entkoppelndes, gaspermeables Element 73. Da kein zusätzliches akustisches Entkopplungselement notwendig ist, das notgedrungen auch eine weitgehende Gasdiffusionshemmung darstellt, ist der Gasaustausch bei dieser Anordnung sehr gut. Vorzugsweise wird das Blatt derart angeordnet, dass die Blattoberseite 72, mit den darunterliegenden chlorophyllhaltigen Blattzellen, vom photoakustischen Detektor 35 abgewendet ist, während die Blattunterseite 73 mit den Spaltöffnungen dem photoakustischen Gasdetektor 35 gegenüberliegt. Durch kontrollierte Einstrahlung von sichtbarem Licht 74 wird das Blatt zur Photosynthese angeregt und damit der Photosynthese-Gasaustausch durch die Spaltöffnungen aktiviert. Die Analyse dieser Gase wird im photoakustischen Gasdetektor 35 mittels des monochromatischen Messlichtstrahls 32' vorgenommen.

Zur Aufrechterhaltung quasi-konstanter Bedingungen bezüglich der Gas-Partialdrucke ist es angezeigt, den photoakustischen Gasdetektor 35 ständig über die Stutzen 38, 38' und Ventile 56, 56' zu spülen und allenfalls den Gasstrom nur während der Messung kurz zu unterbrechen. Auf den Gasstromunterbruch kann verzichtet werden, wenn für eine genügende akustische Entkopplung der Gaszuleitungen 38, 38' und für eine hinreichend konstante Strömung gesorgt wird, sodass die photoakustische Messung nicht wesentlich gestört wird. Zusätzlich ist es von Vorteil, wenn auch die Blattoberseite einer quasi-konstanten Gasatmosphäre ausgesetzt ist.

Erreicht werden kann das beispielsweise mittels eines Blattabdeckgefässes 75, das mit einem Fenster 76 und den Gaszufuhr- und Ableitstutzen 77, 77' versehen ist.

Fig. 8 ist die Darstellung eines photoakustischen Gasdetektors 35, der eine als Stutzen 55 ausgebildete Gasdurchtrittsöffnung 51 aufweist.

Der Stutzen 55 ist durch ein angepresstes, akustisch entkoppelndes, gaspermeables Element 81, das seinerseits die Oberfläche eines Messgutes 82 bildet, abgeschlossen. Allenfalls gewährleistet eine zusätzliche Dichtung 83 einen guten Abschluss des Stutzens 55.

Das Messgut 83 kann ein Organismus oder ein Teil davon sein und entsprechend das gaspermeable Element 81 die Haut desselben. Weiterhin kann es sich beim Messgut 82 um einen umhüllten leblosen Gegenstand handeln, wobei die Umhüllung - beispielsweise eine Kunststofffolie - das akustisch entkoppelnde, gaspermeable Element darstellt. Für zuverlässige und rasche Messungen mag es ratsam sein, den photoakustischen Gasdetektor 35 nach der Abdichtung des Stutzens 55 durch das Messgut 82 über die Gasleitungen 38, 38' und die Ventile 56, 56' zu spülen. Das optische Absorptionsspektrum des Spülgases darf mit demjenigen des zu untersuchenden Gases bekanntlich nicht interferieren.

Fig. 9 ist die Darstellung einer optischen Vorrichtung 31, 31', 32, 33, 37', 39, welche die Beleuchtung des akustisch dämpfenden, gaspermeablen Elementes, beispielsweise die gaspermeable Membrane 52, durch den Messlichtstrahl 32' weitgehend verhindert.

Wie bereits erwähnt worden ist, hat es sich bei gaspermeablen Membranen 52 als günstig erwiesen, wenn dieselben durch den Messlichtstrahl 32' möglichst wenig beleuchtet werden. Andernfalls tritt ein grosses Null-Signal auf, d.h. es kann auch in Abwesenheit eines absorbierenden Gases im Gasdetektor 35 ein grosses photoakustisches Signal beobachtet werden.

Weiterhin ist anzustreben, dass der Messlichtstrahl 32' möglichst effizient auf ein kleines Detektorvolumen V, 35', konzentriert wird, da das photoakustische Signal proportional zur Dichte L/V der im Detektor absorbierten Strahlungsleistung L ist.

Den beiden Anforderungen der Dunkelhaltung des gaspermeablen Elementes 52, 52' 73, 81 mit gleichzeitiger Lichtkonzentration genügt beispielsweise ein konischer Lichtleiter 39 (light pipe).

Mit Hilfe eines rohrförmigen, konischen Innenreflektors 39, wie er in Fig. 9 dargestellt ist, lässt sich bekanntlich ein Lichtstrahl einengen. Diese Einengung bewirkt allerdings eine wesentliche Zunahme der Divergenz des Strahlenbündels am verengten Lichtleiterausgang 39'. Die letztere Eigenschaft der konischen Lichtleiter macht deren Verwendbarkeit zur Lichtkonzentration in vielen Fällen problematisch - zum Beispiel dann, wenn es darum geht, Strahlung auf eine kleine Detektorfläche zu konzentrieren. Wohl ist der Strahlquerschnitt am Lichtleiterausgang 39' sehr eng - wegen der grossen Divergenz kann trotzdem nur ein kleiner Teil des austretenden Lichtes auf die nahe vor der Oeffnung 39' angeordnete Detektorfläche gebracht werden.

Diese Eigenschaft ist hier aber sehr erwünscht, da bekanntlich der Messlichtstrahl 32' dem akustisch dämpfenden, gaspermeablen Element 52, 52', 73, 81 möglichst ferngehalten werden soll. Da letzteres, 52, 52', 73, 81, gegenüber dem verengten Lichtleiterausgang 39' angeordnet werden kann, ergibt sich ein sehr kleinvolumiger photoakustischer Gasdetektor 35.

In der Beschreibung von Fig. 1 wurde auf den Vorteil eines an der Rückwand des photoakustischen Detektors 35 angebrachten Reflektors 37 hingewiesen. Derselbe gestattet eine Rückführung des Messlichtstrahles in die Quelle 32. In analoger Weise kann hier mittels des kalottenförmig gestalteten Reflektors 37' erreicht werden, dass das unter grossem Winkel aus der Lichtleiteröffnung 39' austretende Licht in den Bereich des Strahlers 32 zurückgeworfen wird. Abgesehen vom verlängerten Absorptionslichtweg - führt die Reflektorfläche 37' des photoakustischen Detektors 35 damit zu einer Erhöhung der Effizienz der optischen Vorrichtung. Ein Nachteil der optischen Vorrichtung 31, 33, von Fig. 1 ist der Umstand, dass das durch die Oeffnung 33' austretende Licht inhomogen ist. Der Grund für diese Inhomogenität ist die teilweise Abdeckung des Lichtweges durch den nun partiell transparenten Strahler 32 - beispielsweise die Glühwendel - selbst. Durch Mehrfachreflexion in einem Lichtleiter lässt sich bekanntlich die Inhomogenität in einem Lichtstrahl eliminieren. Der erwähnte konische Lichtleiter 39 ist auch in dieser Beziehung günstig.

Aus finanziellen Erwägungen wäre es vorteilhaft, wenn der optische Bandpassfilter 34 am verengten Lichtleiterausgang 39' angebracht werden könnte (kleiner Durchmesser). Bei Verwendung eines Interferenzfilters ist das aber wegen der grossen Divergenz des Messlichtstrahlers 32' kaum möglich. Das Anbringen des optischen Bandpassfilters 34 an der weiten Oeffnung des Lichtleiters 39 ist daher angezeigt.

Fig. 10 ist eine Darstellung einer Lichtquelle bestehend aus dem Reflektor 31, 31' und der als thermischer Strahler 32 konzipierten Lichtquelle 32, sowie deren thermische Modulation durch Phasenanschnitt, 41-46:

Ausgegangen wird von einem periodischen elektrischen Signal, das einer alternierenden elektrischen Quelle 41, beispielsweise über einen Transformator oder direkt dem Netz entnommen wird. Ein rasches elektronisches Schaltelement 42 schneidet aus dem periodischen Signal periodisch einen Teilbereich heraus, führt denselben dem thermischen Strahler 32 zu und bewirkt eine Modulation der Strahlungsintensität.

Das Schaltelement 42 wird entweder mit der Grundfrequenz oder einer Subharmonischen der elektrischen Quelle 41 betätigt.

Die Verwendung einer Subharmonischen der Grundfrequenz bewirkt, dass das Uebersprechen von der elektrischen Quelle 41 (Brumm im Fall der Verwendung des Netzes als elektrische Quelle) auf das Mikrophon 36 (evt. auch den Lichtdetektor 44) weitgehend verhindert werden kann.

Die Erzeugung des Subharmonischen wird mit einem Frequenzdivisor (43), beispielsweise einem Zähler vorgenommen.

Zur Niedrighaltung der Beanspruchung des Strahlers 32 - und damit zur Verhinderung dessen vorzeitigen Ausfalles - wird der Schalter 42 vorteilhafterweise während des Nulldurchganges der Spannung der Quelle 41 eingeschaltet.

Die Ausschaltung erfolgt entweder nach einer festgelegten Zeit (Phasenanschnittlänge 47" nach Fig. 11) oder beispielsweise nach Erreichung einer vorgegebenen Strahlertemperatur 46". Die Strahlertemperatur wird zum Beispiel mit Hilfe des Lichtdetektors 44 gemessen. Das im Verstärker 45 angehobene Detektorsignal wird im Comparator 46 mit einem Sollwert verglichen 46" in Fig. 11. Mit Hilfe des Ausgangssignales des Comparators 46 wird schliesslich der Schalter 42 rückgestellt.

Als optische Sammelvorrichtung kann eine optische Sammelvorrichtung 31, 32, mit Halbellipsoidreflektor 31 verwendet werden, wie in Fig. 1 dargestellt oder aber auch eine anders geformte optische Sammelvorrichtung 31'.

Fig. 11 zeigt die Funktionsweise der temperatur- kontrollierten Phasenanschnitt-Vorrichtung von Fig. 10. 43' zeigt die zeitliche Folge der Strahlereinschaltpulse 43" des Frequenzdivisors 43 und 46' den zeitlichen Verlauf der Strahlertemperatur mit vorgegebenem Temperatur- Sollwert 46".

In 47' ist der zeitliche Verlauf der Spannung 47 der elektrischen Quelle 41 festgehalten (unterbrochene Linie), sowie das Signal 47", das dem Strahler 32 zugeführt wird (ausgezogene Linie).

Fig. 12 zeigt eine Darstellung des Schaltprinzipes des N-Pfadfilters (N-path filter), das sich zur Erfassung und Analyse des Mikrophonsignales eignet. Das stark verrauschte, einen kleinen periodischen Anteil enthaltende Signal eines akustischen Detektors, beispielsweise des Mikrophons 36, wird im selektiven Verstärker 61 verstärkt und wegen seiner Bandpasscharakteristik von niedrig- und hochfrequenten Störsignalen befreit. Das Signal wird anschliessend einem Signalanalyseteil 62-68 zugeführt, in welchem der periodische Signalanteil aufgearbeitet wird. Diese Aufarbeitung besteht darin, dass die Periode des Nutzsignales (also des periodischen Anteils des verstärkten Detektor Signals) in eine Anzahl - mindestens zwei - Zeitschlitze unterteilt wird. Die Synchronisation des zeitschlitz-unterteilten Elementes 63 wird mittels eines Referenzsignales 68 vorgenommen, das seinerseits mit dem, im Detektor erzeugten periodischen Signalanteil synchronisiert ist. In mindestens einem der Zeitschlitze wird eine Signalmittelwert-Bildung vorgenommen. Die allenfalls mehreren Signalmittelwerte, die den verschiedenen Zeitschlitzen entsprechen, können beispielsweise durch Differenzbildung aufgearbeitet werden und einem Registrier- resp. Anzeige-Element zugeführt werden.

Realisiert wird die Zeitschlitz-Unterteilung beispielsweise durch einen zyklischen Schalter 63, der, gesteuert über den Frequenzsynchronisator 64, synchron mit dem zu analysierenden, periodischen Anteil des Detektorsignales läuft. Die Signalmittelwertsbildung kann auf einfache Weise mit RC-Gliedern realisiert werden, welche beispielsweise aus einem gemeinsamen ohmischen Widerstand 62, sowie aus den Kapazitäten 65, 65',.... bestehen. Vorteilhafterweise werden die Kapazitäten 65, 65', ... von gleicher Grösse gewählt. Die RC-Zeitkonstanten sind gegenüber den Zeitschlitzlängen gross zu wählen. Damit stellen sich über den Kapazitäten 65, 65',.... Spannungen ein, die dem vom Rauschen weitgehend befreiten periodischen Anteil des Mikrophonsignals entsprechen. Die Messung der Spannungen an den Kapazitäten 65, 65', ... erfolgt über die Verstärkerstufen 66, 66', deren Eingangsströme am Widerstand 62 verschwindend kleine Spannungsabfälle bewirken. Allenfalls lässt sich das gesuchte periodische Signal aus Vergleichsmessungen der Spannungen an mehreren Kapazitäten 65, 65', ... ermitteln.

In Fig. 12 werden beispielsweise die Spannungen an den Kapazitäten 65, 65' in der Analog-Subtraktionsstufe 67 verarbeitet.

Aus dem Spannungsverhältnis an den Kapazitäten 65, 65' lässt sich die Phase zwischen dem Signal, das zur Modulation an der Lichtquelle 32 angelegt ist, und dem Signal am Mikrophon 36 bestimmen. Da dieses Spannungsverhältnis weitgehend unabhängig von der Messsignalgrösse ist, aber sich stark ändert, falls der Strahler 32, die optische Sammelvorrichtung 31, 31', 33, das Mikrophon 36 oder die akustisch entkoppelnde Vorrichtung 22, 22', 24, 24', 52, 52', beispielsweise die gaspermeable Membrane 52, nicht voll funktionstüchtig ist, kann die Phasenlage zur Funktionskontrolle verwendet werden.

Zusammenfassend lässt sich die erfindungsgemässe Vorrichtung und deren Verwendbarkeit wie folgt beschreiben:

Die optische Detektionsvorrichtung für den selektiven Nachweis von Gasen ist dadurch gekennzeichnet, dass die Gassammelzelle zugleich ein photoakustischer Gasdetektor 35 und dass die Gasaustauschvorrichtung ein für Gase stets durchlässiges, akustisch dämpfendes Element, wie etwa eine gaspermeable Membrane 52 oder ein starres, poröses Material 52' ist und mit dem sich an der Gasauffangsstelle 54 befindliche zu messenden Medium, wie etwa einer Flüssigkeit oder einen festen Messgut in Kontakt bringbar ist. Die gaspermeable Membrane 52, 73, 81 kann die umhüllende Begrenzung eines Messgutes 71, 82 sein.

Die optische Sammelvorrichtung 31, 31', 32, 33 kann derart ausgebildet sein, dass das für Gase stets durchlässige, akustisch dämpfende Element 52, 52', 73, 81 vom Messlichtstrahl 32' möglichst nicht getroffen wird. Diese Forderung kann beispielsweise unter Verwendung eines, einen stark divergenten Messlichtstrahl 32' erzeugenden, konischen Lichtleiter 39 erreicht werden. Derselbe kann gegenüber dem gaspermeablen Element angeordnet sein. In diesem Falle ist es günstig, dem photoakustischen Gasdetektor 35 eine derartige Hohlspiegelform 37' zu verleihen, dass die aus der Lichtleiteröffnung 39' austretende Strahlung wieder auf die Lichtleiteröffnung 39' zurückfällt.

Der Durchtritt 51 zwischen dem photoakustischen Detektor 35 und dem gaspermeablen akustisch entkoppelnden Element 52, 52', 73, 81 kann stutzenförmig, 55, verlängert sein.

Die Gasauffangsstelle 54 kann beispielsweise mit einem gas- und/oder dampferzeugenden Element 10', das allenfalls ein chemischer Reaktor 10 ist, verbunden sein, oder der chemische Reaktor 10 ist selbst an der Gasauffangsstelle 54 angeordnet.

Der chemische Reaktor 10 kann ein biologisch aktives Medium enthalten, das allenfalls auf einem Träger 15, beispielsweise auf der gaspermeablen Membrane 52, oder auf starrem, porösen Material 52' mobilisiert ist.

Die optische Detektionsvorrichtung für den selektiven Nachweis von Gasen ist ferner dadurch gekennzeichnet, dass nebst der Verwendung eines photoakustischen Gasdetektors 35 und eines stets für Gase durchlässigen, akustischen dämpfenden Elementes 52, 52', 73, 81 eine optische Sammelvorrichtung 31, 31' 33 verwendet wird, sowie ein Strahler 32, dessen Intensität durch Phasenanschnitt eines periodischen elektrischen Signales 41 thermischn moduliert wird. Der Phasenanschnitt kann mit einer subharmonischen Frequenz des periodischen elektrischen Signales 41 vorgenommen werden, wobei allenfalls von der Netzfrequenz ausgegangen wird. Die Intensität des Stahlers 32 kann über die Phasenanschnittlänge 47" kontrolliert werden.

Es wird auch vorgesehen, die Phasenanschnittlänge aufgrund einer Messung der Intensität oder Temperatur des Strahlers 32 mittels eines Lichtdetektors 44 zu kontrollieren. Des weiteren ist eine Detektionsvorrichtung für den selektiven Nachweis von Gasen dadurch ausgezeichnet, dass Signalverarbeitungsmittel 61, 62, 63, 64, 65, 65', 66, 66', 67 vorhanden sind, die aus einem selektiven Verstärker 61 sowie aus einem Signalanalyseteil 62, 63, 64, 65, 65', 66, 66', 67 bestehen. Letzterer unterteilt die Periode des vom Mikrophon 36 gelieferten Nutzsignales in mindestens zwei Zeitschlitze, wobei in mindestens einem derselben eine Signalmittelwertbildung vorgenommen wird. Die Zeitschlitzunterteilung kann mit Hilfe eines zyklischen Schalters 63, sowie die Signalmittelwertbildung mittels R(62) - C(65, 65'...) - Gliedern realisiert werden. Das Vorhandensein von mindestens zwei RC-Gliedern erlaubt die Bestimmung der Phasenlage zwischen dem Modulationssignal am Strahler 32 und dem Signal am Mikrophon 36.

Der Messlichtstrahl 32' kann einer optischen Sammelvorrichtung 31, 32, 33 entstammen, der aus einem halbellipsoidförmigen Hohlspiegel 31, und einem planspiegelförmigen Gegenreflektor 33 besteht. Letzterer ist bei der mittelhalbierenden Ebene der Ellipsoidfläche 31 angebracht. Die Strahlung des teilweise transparenten thermischen Strahlers 32, welcher sich beim inneren Brennpunkt der Halbellipsoidfläche 31 befindet, wird durch die dezentrale Lichtaustrittsöffnung 33' des Gegenreflektors 33 ausgekoppelt.

Die Vorrichtung kann zur Messung des den photoakustischen Gasdetektor 35 umgebenden Gases verwendet werden. Ebenso kann die Vorrichtung zur Messung der, in einem Messgut 82 in gasförmiger oder gelöster Form, vorhandenen oder gebildeten und die gaspermeable Messgutumhüllung 81 durchdringenden Gase verwendet werden. Weiterhin kann die Vorrichtung dazu verwendet werden, Photosynthese-Austauschgase pflanzlicher Organismen zu untersuchen, indem ein direkter Gasaustausch zwischen dem Organismus 71 und dem photoakustischen Gasdetektor 35 durch den Gasdurchtritt 51 ermöglicht wird.

Die Vorrichtung kann dazu verwendet werden, dass in den Reaktor 10 ein aus einem oder mehreren Substraten bestehendes oder ein oder mehrere Substrate enthaltendes Medium gegeben wird, das im Reaktor 10 biologisch umgesetzt werden kann, so dass ein oder mehrere Gase gebildet werden.

Letztere werden im photoakustischen Gasdetektor 35 analysiert.

Die Vorrichtung kann zum Nachweis giftiger, die biologische Umsetzung reversibel oder irreversibel blockierender Stoffe verwendet werden, indem in den Reaktor 10 nebst dem biologisch umsetzbaren Substrat oder den Substraten ein Stoff beigefügt ist, der die biologische Umsetzung blockiert.

Die Kenntnis dieser Phasenlage kann zur Kontrolle der Funktion des Strahlers 32, der optischen Sammelvorrichtung 31, 31', 33 des Mikrophons 36 und der akustischen Entkopplungsvorrichtungen 22, 22', 24, 24', 52, 52', 73, 81 verwendet werden.

Die Vorrichtung kann zur Messung von CO2 und/oder CO verwendet werden.

Die Vorrichtung kann dazu verwendet werden, mittels des photoakustischen Effektes spezifisch die Gasdurchlässigkeit und die akustische Dämpfung von gaspermeablen Elementen 52, 52', 81, wie gaspermeablen Membranen 52, zu bestimmen.

## Patentansprüche

1. Verfahren zum photoakustischen Nachweis von Gasen und Dämpfen, **dadurch gekennzeichnet,** dass ein gasförmiges Medium durch Gasdiffusion durch ein stets gasdurchlässiges, akustisch dämpfendes Element zwischen einem auf dem photoakustischen Prinzip beruhenden Gasdetektor (35) und einer Gasauffangstelle stets ausgetauscht wird, wobei während des Gasaustausches eine photoakustische Messung durchgeführt wird.

2. Verfahren nach Anspruch 1, **dadurch gekennzeichnet,** dass ein Messgut (82) mit dem photoakustischen Gasdetektor (35) in Kontakt gebracht wird, sodass das gasförmige Medium durch eine gaspermeable, umhüllende Begrenzung (81) des Messgutes mit dem photoakustischen Gasdetektor (35) ständig ausgetauscht wird.

3. Verfahren nach Anspruch 1, **dadurch gekennzeichnet,** dass eine Flüssigkeit über ein gaspermeables Element (52, 73, 81) mit dem photoakustischen Gasdetektor in Kontakt gebracht wird, sodass ein gasförmiges Medium durch Diffusion zwischen Flüssigkeit und dem Gasdetektor stets ausgetauscht wird.

4. Verfahren nach Anspruch 3, **dadurch gekennzeichnet,** dass eine Flüssigkeit verwendet wird, welche ein oder mehrere gelöste Gase enthält.

5. Verfahren nach Anspruch 3 oder 4, **dadurch**

**gekennzeichnet,** dass in der Flüssigkeit Substrate biologisch derart umgesetzt werden, dass ein oder mehrere Gase gebildet werden, die mit dem Gasdetektor (35) durch Gasdiffusion ausgetauscht werden.

6. Verfahren nach Anspruch 5, **dadurch gekennzeichnet,** dass der Flüssigkeit Stoffe zugesetzt werden, welche die biologische Umsetzung reversibel oder irreversibel blockieren.

7. Verfahren nach Anspruch 5 oder 6, **dadurch gekennzeichnet,** dass die Flüssigkeit zur biologischen Umsetzung von Substraten einem Reaktor, der biologisch aktive Substanzen enthält, zugeführt wird.

8. Verfahren nach Anspruch 2, **dadurch gekennzeichnet,** dass das gasförmige Medium durch eine gaspermeable, umhüllende Begrenzung (81) eines photosynthetisierenden Organismus (71) ausgetauscht wird.

9. Verfahren nach Anspruch 5 und 7, **dadurch gekennzeichnet,** dass mittels einer oder mehreren suspendierten oder auf einem oder mehreren Trägern (15) immobilisierten, biologisch aktiven, im Reaktionsraum (14) enthaltenen Substanzen ein oder mehrere zugeführte Substrate in einer Folge von Schritten bis zu einem oder mehreren gas- oder dampfförmigen Produkten umgesetzt werden.

10. Optische Detektionsvorrichtung für den selektiven Nachweis von Gasen und Dämpfen mit einem Strahler, einer optischen Sammelvorrichtung (31, 31', 32, 33), einem Monochromator (34), einem auf dem photoakustischen Prinzip beruhenden Gasdetektor (35), einer Gassammelzelle, einer Gasauffangsstelle (54) und mit Signalverarbeitungsmitteln sowie einer Gasaustauschvorrichtung, **dadurch gekennzeichnet,** dass die Gasaustauschvorrichtung ein durch Gasdiffusion ein Gasaustausch gestattendes für Gase stets durchlässiges, akustisch dämpfendes Element (52,52',73,81) ist, das mit dem sich an der Gasauffangstelle (54) befindlichen zu messenden Medium in Kontakt bringbar ist.

11. Detektionsvorrichtung nach Anspruch 10, **dadurch gekennzeichnet,** dass die Gasauffangstelle (54) als ein eine Flüssigkeit enthaltendes Gefäss ausgelegt ist, oder dass an der Gasauffangstelle (54) ein festes Messgut mit dem für Gase stets durchlässigen, akustisch dämpfenden Element in Kontakt gebracht ist.

12. Detektionsvorrichtung nach Anspruch 10 oder 11, **dadurch gekennzeichnet,** dass das für Gase stets durchlässige, akustisch dämpfende Element (52, 52', 73, 81) eine gaspermeable Membrane (52, 73, 81) ist.

13. Detektionsvorrichtung nach Anspruch 10 oder 11, **dadurch gekennzeichnet,** dass das für Gase stets durchlässige, akustisch dämpfende Element (52, 52', 73, 81) ein starres poröses Material (52'), insbesondere ein Sintergut, ist.

14. Detektionsvorrichtung nach einem der Ansprüche 10 bis 13, **dadurch gekennzeichnet,** dass der Durchtritt (51) zwischen dem photoakustischen Gasdetektor (35) und der Gasaustauschvorrichtung stutzenartig (55) verlängert ist.

15. Detektionsvorrichtung nach Anspruch 12, **dadurch gekennzeichnet,** dass die gaspermeable Membrane (52, 73, 81) eine umhüllende Begrenzung eines Messgutes (71, 82) bildet.

16. Detektionsvorrichtung nach einem der Ansprüche 10 bis 15, **dadurch gekennzeichnet,** dass über einen Stutzen (11') eine Verbindung zwischen einem gas- und/oder dampferzeugenden Element (10') und der Gasauffangstelle (54) besteht.

17. Detektionsvorrichtung nach Anspruch 16, **dadurch gekennzeichnet,** dass das gas- und/oder dampferzeugende Element (10') ein chemischer Reaktor (10) ist.

18. Detektionsvorrichtung nach Anspruch 16 oder 17, **dadurch gekennzeichnet,** dass der Reaktionsraum (14) des Reaktors (10) ein biologisch aktives Medium enthält.

19. Detektionsvorrichtung nach Anspruch 18, **dadurch gekennzeichnet,** dass das biologisch aktive Medium auf einem Träger (15) immobilisiert ist.

20. Detektionsvorrichtung nach einem der Ansprüche 10 bis 19, **dadurch gekennzeichnet,** dass der Strahler (32) thermischer Art ist.

21. Detektionsvorrichtung nach Anspruch 20, **dadurch gekennzeichnet,** dass die optische Sammelvorrichtung einen halbellipsoidförmigen Hohlspiegel (31), bei dessen innerem Brennpunkt sich ein optisch teilweise transparenter thermischer Strahler (32) befindet, und einen planspiegelförmigen Gegenreflektor (33) enthält, welcher letzterer bei der mittelhalbierenden Ebene der Ellipsoidfläche (31) angeordnet ist und eine zentrale Lichtaustrittsöffnung (33') aufweist.

22. Detektionsvorrichtung nach einem der Ansprüche 10 bis 21, **dadurch gekennzeichnet,** dass die Signalverarbeitungsmittel (60, 61) aus einem selektiven Verstärker (61) und einem Signalanalyseteil (60) bestehen, wobei letzterer die Periode des vom Mikrophon (36) gelieferten Nutzsignales in mindestens zwei Zeitschlitze unterteilt und in mindestens einem der Zeitschlitze eine Signalmittelwertbildung vorgenommen wird.

23. Detektionsvorrichtung nach Anspruch 22, **dadurch gekennzeichnet,** dass die Einteilung in Zeitschlitze mittels eines zyklischen Schalters (63) vorgenommen wird und die Signalmittelwertbildung mit passiven Tiefpassgliedern, bestehend aus einem gemeinsamen Widerstand (62) und Kapazitäten ( 65, 65',...), erfolgt.

24. Detektionsvorrichtung nach Anspruch 23, **dadurch gekennzeichnet,** dass der zyklische Schalter mit mindestens zwei passiven Tiefpassgliedern, bestehend aus einem gemeinsamen Widerstand (62) und den Kapazitäten ( 65, 65',...) verbunden ist, sodass die Phase zwischen dem Modulationssignal am Strahler (32) und dem Signal am Mikrophon (36) gemessen werden kann.

25. Detektionsvorrichtung nach einem der Ansprüche 10 bis 24, **dadurch gekennzeichnet,** dass die Gassammelstelle eine optische Sammelvorrichtung (31, 32, 33) ist und dass das für Gase stets durchlässige, akustisch dämpfende Element (52, 52', 73, 81) derart angeordnet ist, dass letzteres vom Messlichtstrahl (32) nicht direkt getroffen wird.

26. Detektionsvorrichtung nach einem der Ansprüche 10 bis 25, **dadurch gekennzeichnet,** dass der photoakustische Gasdetektor (35) einen ebenen Lichtreflektor enthält.

27. Detektionsvorrichtung nach einem der Ansprüche 10 bis 25, **dadurch gekennzeichnet,** dass der photoakustische Gasdetektor (35) einen gekrümmten (37) oder kalottenförmigen (37') Lichtreflektor enthält.

28. Detektionsvorrichtung nach Anspruch 27, **dadurch gekennzeichnet,** dass die Rückwand des photoakustischen Gasdetektors (35) eine Hohlspiegelform (37') aufweist, sodass der Messlichtstrahl (32'), der aus der Lichtleiteröffnung (39') austritt, auf letztere (39'), möglichst vollständig zurückgeworfen wird.

29. Detektionsvorrichtung nach einem der Ansprüche 10 bis 28, **dadurch gekennzeichnet,** dass der Messlichtstrahl (32') über einen konischen Lichtleiter (39) derart in den photoakustischen Gasdetektor (35) eingekoppelt wird, dass ein stark divergenter Lichtstrahl gebildet wird, sodass das gegenüber der Lichtleiteröffnung (39') angeordnete, gaspermeable, akustisch entkoppelnde Element (52, 52', 73, 81) möglichst nicht getroffen wird.

30. Verfahren nach Anspruch 1 zum Betrieb einer Detektionsvorrichtung gemäss Anspruch 10, **dadurch gekennzeichnet,** dass die Intensität des Strahlers (32) durch Phasenanschnitt eines periodischen elektrischen Signales (41) thermisch moduliert wird.

31. Verfahren nach Anspruch 1 zum Betrieb einer Detektionsvorrichtung nach Anspruch 21, **dadurch gekennzeichnet,** dass ein das photoakustische Signal hervorrufender Messlichtstrahl (32') der optischen Sammelvorrichtung (31, 33) entstammt.

32. Verfahren nach Anspruch 30 zum Betrieb einer Detektionsvorrichtung, **dadurch gekennzeichnet,** dass der Phasenanschnitt mit der Subharmonischen der Frequenz eines periodischen elektrischen Signals (41) vorgenommen wird.

33. Verfahren zum Betrieb einer Detektionsvorrichtung gemäss Anspruch 32, **dadurch gekennzeichnet,** dass der Phasenanschnitt mit einer Subharmonischen der Netzfrequenz vorgenommen wird.

34. Verfahren zum Betrieb einer Detektionsvorrichtung gemäss Anspruch 32 oder 33, **dadurch gekennzeichnet,** dass die modulierte Intensität des Strahlers (32) über die Phasenanschnittlänge (47'') kontrolliert wird.

35. Verfahren zum Betrieb einer Detektionsvorrichtung gemäss Anspruch 34, **dadurch gekennzeichnet,** dass die Kontrolle der modulierten Intensität des Strahlers (32) über die Phasenanschnittslänge (47'') aufgrund der Messung mittels eines zusätzlichen Lichtdetektors (44) erfolgt.

## Claims

1. Method for the photoacoustic detection of gases and vapours, characterized in that a gaseous medium is continuously interchanged through an always gas-permeable, acoustically damping element between a gas detector (35) based on the photoacoustic principle and a gas collecting station, a photoacoustic measurement being performed during the gas exchange.

2. Method according to claim 1, characterized in that a material to be measured (82) is contacted with the photoacoustic gas detector (35), so that the gaseous medium is continuously exchanged through a gas-permeable, enveloping boundary (81) of the material to be measured with the photoacoustic gas detector (35).

3. Method according to claim 1, characterized in that a liquid is contacted via a gas-permeable element (52, 73, 81) with the photoacoustic gas detector, so that a gaseous medium is continuously exchanged by diffusion between the liquid and the gas detector.

4. Method according to claim 3, characterized in that a liquid containing one or more dissolved gases is used.

5. Method according to claims 3 or 4, characterized in that within the liquid substrates are biologically reacted in such a way that one or more gases are formed, which are exchanged by gas diffusion with the gas detector (35).

6. Method according to claim 5, characterized in that substances, which reversibly or irreversibly block the biological reaction are added to the liquid.

7. Method according to claims 5 or 6, characterized in that for the biological reaction of substrates the liquid is supplied to a reactor containing biologically active substances.

8. Method according to claim 2, characterized in that the gaseous medium is exchanged by a gas-permeable, enveloping boundary (81) of a photosynthesizing organism (71).

9. Method according to claims 5 and 7, characterized in that by means of one or more biologically active substances contained in the reaction chamber (14), which are suspended or immobilized on one or more carriers (15), one or more supplied substrates in a sequence of steps are reacted to form one or more gaseous or vaporous products.

10. Optical detector for the selective detection of gases and vapours with a radiator, an optical collecting device (31, 31', 32, 33), a monochromator (34), a gas detector (35) based on the photoacoustic principle, a gas collecting cell, a gas collecting station (54) and signal processing means, together with a gas exchange means, characterized in that the gas exchange means is a constantly gas-permeable, acoustically damping element (52, 52', 73, 81) permitting a gas exchange by gas diffusion and which can be contacted with the medium to be measured located at the gas collecting station (54).

11. Detector according to claim 10, characterized in that the gas collecting station (54) is constructed as a liquid-containing vessel, or at the gas collecting station (54) a fixed material to be measured is contacted with the constantly gas-permeable, acoustically damping element.

12. Detector according to claims 10 or 11, characterized in that the constantly gas-permeable, acoustically damping element (52, 52', 73, 81) is a gas-permeable diaphragm (52, 73, 81).

13. Detector according to claims 10 or 11, characterized in that the constantly gas-permeable, acoustically damping element (52, 52', 73, 81) is a rigid porous material (52') and in particular a sintered material.

14. Detector according to one of the claims 10 to 13, characterized in that the passage (51) between the photoacoustic gas detector (35) and the gas exchange means is extended in connecting piece-like manner (55).

15. Detector according to claim 12, characterized in that the gas-permeable diaphragm (52, 73, 81) forms an enveloping boundary of a material to be measured (71, 82).

16. Detector according to one of the claims 10 to 15, characterized in that via a connecting piece (11'), there is a connection between a gas and/or vapour-producing element (10') and the gas collecting station (54).

17. Detector according to claim 16, characterized in that the gas and/or vapour-producing element (10') is a chemical reactor (10).

18. Detector according to claims 16 or 17, characterized in that the reaction chamber (14) of the reactor (10) contains a biologically active medium.

19. Detector according to claim 18, characterized in that the biologically active medium is immobilized on a carrier (15).

20. Detector according to one of the claims 10 to 19, characterized in that the radiator (32) is of a thermal type.

21. Detector according to claim 20, characterized in that the optical collecting device contains a hemiellipsoidal concave mirror (31), at whose inner focus is located an optically, partly transparent, thermal radiator (32), as well as a plane mirror-like counterreflector (33), the latter being located at the centre-halving plane of the ellipsoidal face (31) and has a central light exit port (33').

22. Detector according to one of the claims 10 to 21, characterized in that the signal processing means (60, 61) comprises a selective amplifier (61) and a signal analysis part (60), the latter subdividing the period of the useful signal supplied by the microphone (36) into at least two time slots and a signal averaging is performed in at least one of the time slots.

23. Detector according to claim 22, characterized in that the subdivision into time slots takes place by means of a cyclic switch (63) and the signal averaging is carried out with passive low-pass elements comprising a common resistor (62) and capacitors (65, 65', etc.)

24. Detector according to claim 23, characterized in that the cyclic switch is connected to at least two passive low-pass elements comprising a common resistor (62) and the capacitors (65, 65', etc.), so that the phase between the modulation signal at the radiator (32) and the signal at the microphone (36) can be measured.

25. Detector according to one of the claims 10 to 24, characterized in that the gas collecting station is an optical collecting device (31, 32, 33) and that the constantly gas-permeable, acoustically damping element (52, 52', 73, 81) is arranged in such a way that the measuring light beam (32) does not strike it directly.

26. Detector according to one of the claims 10 to 25, characterized in that the photoacoustic gas detector (35) contains a planar light reflector.

27. Detector according to one of the claims 10 to 25, characterized in that the photoacoustic gas detector (35) contains a curved (37) or spherical (37') light reflector.

28. Detector according to claim 27, characterized in that the rear wall of the photoacoustic gas detector (35) has a concave mirror shape (37'), so that the measuring light beam (32') passing out of the light guide opening (39') is reflected as completely as possible on the latter (39').

29. Detector according to one of the claims 10 to 28, characterized in that the measuring light beam (32') is so coupled into the photoacoustic gas detector (35) by means of a conical light guide (39), that a highly divergent light beam is formed, so that the gas-permeable, acoustically uncoupling element (52, 52', 73, 81) positioned facing the light guide opening (39') is not struck.

30. Method according to claim 1 for the operation of a detector according to claim 10, characterized in that the intensity of the radiator (32) is thermally modulated by the phase lag of a periodic electric signal (41).

31. Method according to claim 1 for operating a detector according to claim 21, characterized in that a measuring light beam (32') causing the photoacoustic signal comes from the optical collecting device (31, 33).

32. Method according to claim 30 for operating a detector, characterized in that the phase lag takes place with the subharmonic of the frequency of a periodic electrical signal (41).

33. Method for operating a detector according to claim 32, characterized in that the phase lag is carried out with a subharmonic of the mains frequency.

34. Method for operating a detector according to claims 32 or 33, characterized in that the modulated intensity of the radiator (32) is controlled via the phase lag length (47'').

35. Method for operating a detector according to claim 34, characterized in that the modulated intensity of the radiator (32) is controlled via the phase lag length (47'') on the basis of the measurement by means of an additional light detector (44).

**Revendications**

1. Procédé de détection photo-acoustique de gaz et de vapeurs, caractérisé en ce qu'on fait passer un milieu gazeux par diffusion gazeuse à travers un premier élément toujours perméable aux gaz, assurant un amortissement acoustique, entre un détecteur de gaz (35) fonctionnant selon le principe photo-acoustique et un point de collecte de gaz, et pendant l'échange gazeux on effectue une mesure photo-acoustique.

2. Procédé selon la revendication 1, caractérisé en ce qu'on met un produit de mesure (82) en contact avec le détecteur de gaz photo-acoustique (35) pour que le milieu gazeux soit en permanence renouvelé à travers une enveloppe (81) du produit de mesure, enveloppe qui est perméable aux gaz, pour s'échanger en permanence avec le détecteur de gaz photo-acoustique (35).

3. Procédé selon la revendication 1, caractérisé en ce qu'un liquide est mis en contact avec le détecteur de gaz photo-acoustique par l'intermédiaire d'un élément perméable aux gaz (52, 73, 81) pour échanger en permanence un milieu gazeux par diffusion entre le liquide et le détecteur de gaz.

4. Procédé selon la revendication 3, caractérisé en ce qu'on utilise un liquide qui contient des gaz dans un état plus ou moins dissout.

5. Procédé selon la revendication 3 ou 4, caractérisé en ce qu'on transforme des substrats biologiques dans le liquide pour former un ou plusieurs gaz qui sont échangés par diffusion gazeuse avec le détecteur de gaz (35).

6. Procédé selon la revendication 5, caractérisé en ce qu'on ajoute des corps au liquide qui bloquent de manière réversible ou irréversible la transformation biologique.

7. Procédé selon la revendication 5 ou 6, caractérisé en ce qu'on met le liquide de conversion biologique des substrats dans un réacteur qui contient des substances biologiquement actives.

8. Procédé selon la revendication 2, caractérisé en ce que le milieu gazeux est échangé à travers une enveloppe (81) perméable aux gaz d'un organisme (71) faisant de la photosynthèse.

9. Procédé selon les revendications 5 et 7, caractérisé en ce qu'à l'aide d'une ou plusieurs substances biologiquement actives contenues dans la chambre de réaction (14), et en suspension ou immobilisée sur un ou plusieurs supports (15), on transforme un ou plusieurs substrats, ajoutés, au cours d'une succession d'étapes jusqu'à obtenir un ou plusieurs produits gazeux ou à l'état de vapeur.

10. Dispositif de détection optique pour la détection sélective de gaz et de vapeurs à l'aide d'un émetteur de rayonnement d'un dispositif collecteur optique (31, 31', 32, 33), d'un monochromateur (34), d'un détecteur de gaz (35) fonctionnant selon le principe photo-actif, d'une cellule collectrice de gaz, d'un point de réception de gaz (54) et de moyens de traitement de signaux ainsi que d'un dispositif d'échange de gaz, dispositif de détection caractérisé en ce que le dispositif d'échange de gaz est un élément d'amortissement acoustique (52, 52', 73, 81) toujours perméable aux gaz, permettant un échange de gaz par diffusion gazeuse, cet élément pouvant être mis en contact avec le milieu à mesurer et qui se trouve au point de réception de gaz (54).

11. Dispositif de détection selon la revendication 10, caractérisé en ce que le point de réception de gaz (54) est un récipient contenant un liquide ou en ce qu'au point de réception de gaz (54), un produit de mesure, solide, est mis en contact avec un élément d'amortissement acoustique, toujours perméable aux gaz.

12. Dispositif de détection selon la revendication 10 ou 11, caractérisé en ce que l'élément d'amortissement acoustique (52, 52', 73, 81) toujours perméable aux gaz, est une membrane (52, 73, 81) perméable aux gaz.

13. Dispositif de détection selon la revendication 1, 10 ou 11, caractérisé en ce que l'élément d'amortissement acoustique (52, 52', 73, 81), toujours perméable aux gaz, est un matériau poreux rigide (52') notamment un produit de frittage.

14. Dispositif de détection selon l'une des revendications 10 à 13, caractérisé en ce que le passage (51) entre le détecteur de gaz (35) photoacoustique et le dispositif d'échange de gaz est prolongé par un ajutage (55).

15. Dispositif de détection selon la revendication 12, caractérisé en ce que la membrane (52, 73, 81) perméable aux gaz, est une enveloppe entourant un produit de mesure (71, 82).

16. Dispositif de détection selon l'une des revendications 10 à 15, caractérisé en ce qu'une liaison est réalisée par un ajutage (11'), entre un élément (10') créant un gaz et/ou de la vapeur et un point de réception de gaz (54).

17. Dispositif de détection selon la revendication 16, caractérisé en ce que l'élément (10') créant le gaz et/ou la vapeur est un réacteur chimique (10).

18. Dispositif de détection selon la revendication 16 ou 17, caractérisé en ce que la chambre de réaction (14) du réacteur (10) est un milieu biologiquement actif.

19. Dispositif de détection selon la revendication 18, caractérisé en ce que le milieu biologiquement actif est immobilisé sur un support (15).

20. Dispositif de détection selon l'une des revendications 10 à 19, caractérisé en ce que l'émetteur de rayonnement (32) est de type thermique.

21. Dispositif de détection selon la revendication 20, caractérisé en ce que le dispositif collecteur optique est un miroir creux (31) en forme de demi-ellipsoïde avec un émetteur thermique (32) partiellement transparent, placé au foyer intérieur et comportant un réflecteur antagoniste (33) en forme de miroir plan, ce réflecteur étant placé dans le plan médian de la surface (31) de l'ellipsoïde et comporte une ouverture centrale (33') pour la lumière.

22. Dispositif de détection selon l'une des revendications 10 à 21, caractérisé en ce que le moyen de traitement de signal (60, 61) se compose d'un amplificateur sélectif (61) et d'un analyseur de signal (60), ce dernier subdivisant la période du signal utile fourni par un microphone (36) en au moins deux fenêtres de temps et il forme la valeur moyenne du signal pour au moins l'une des fenêtres de temps en au moins deux fenêtres de temps et en ce que dans au moins dans l'une des fenêtres de temps il forme la valeur moyenne du signal.

23. Dispositif de détection selon la revendication 22, caractérisé en ce que la subdivision en fenêtres de temps est faite à l'aide d'un commutateur cyclique (63) et la formation de la valeur moyenne du signal se fait avec des filtres passe-bas, passifs, formés d'un résistance commune (62) et de capacités (65, 65' ...).

24. Dispositif de détection selon la revendication 23, caractérisé en ce que le commutateur cyclique est relié à au moins deux filtres passe-bas passifs composés d'une résistance commune (62) et de capacités (65, 65', ...) pour permettre de mesurer la phase entre le signal de modulation de l'émetteur de rayonnement (32) et le signal du microphone (36).

25. Dispositif de détection selon l'une des revendications 10 à 24, caractérisé en ce que le point de collecte de gaz est un dispositif collecteur optique (31, 32, 33) et en ce que l'élément d'amortissement acoustique (52, 52', 73, 81) toujours perméable aux gaz est monté pour ne pas être touché directement par le faisceau de la lumière de mesure (32).

26. Dispositif de détection selon l'une des revendications 10 à 25, caractérisé en ce que le détecteur de gaz photo-acoustique (35) comporte un réflecteur de lumière, plan.

27. Dispositif de détection selon l'une des revendications 10 à 25, caractérisé en ce que le détecteur de gaz photo-acoustique (35) comporte un réflecteur de lumière courbe (37) ou en forme de calotte (37').

28. Dispositif de détection selon la revendication 27, caractérisé en ce que la paroi arrière du détecteur de gaz photo-acoustique (35) comporte une forme de miroir creux (37') pour que le faisceau de la lumière de mesure (32') qui sort de l'ouverture du guide de lumière (39') soit renvoyé aussi complètement que possible sur cette ouverture (39').

29. Dispositif de détection selon l'une des revendications 10 à 28, caractérisé en ce que le faisceau de lumière de mesure (32') est couplé dans le détecteur de gaz photo-acoustique (35) par un guide de lumière (39) phonique, pour former un faisceau lumineux fortement divergent, pour que l'élément de découplage acoustique (52, 52', 73, 81), perméable aux gaz, placé en regard de l'ouverture du guide de lumière (39') ne soit pratiquement pas touché.

30. Procédé selon la revendication 1 pour la mise en oeuvre d'un dispositif de détection selon la revendication 10, caractérisé en ce que l'intensité de l'émetteur de rayonnement (32) est modulé thermiquement par un découpage de phase d'un signal électrique périodique (41).

31. Procédé selon la revendication 1 pour la mise en oeuvre d'un dispositif de détection selon la revendication 21, caractérisé en ce que le faisceau de lumière de mesure (32') qui engendre le signal photoacoustique provient du dispositif collecteur optique (31, 33).

32. Procédé selon la revendication 30 pour la mise en oeuvre d'un dispositif de détection, caractérisé en ce que le découpage de phase se fait avec la sous-harmonique de la fréquence d'un signal électrique période (41).

33. Procédé de mise en oeuvre d'un dispositif de détection selon la revendication 32, caractérisé en ce que le découpage de phase est fait avec une sous-harmonique de la fréquence du réseau électrique.

34. Procédé de mise en oeuvre d'un dispositif de détection selon la revendication 32 ou 33, caractérisé en ce que l'intensité modulée de l'émetteur de rayonnement (32) est contrôlée par la longueur de découpe de phase (47'').

35. Procédé de mise en oeuvre d'un dispositif de détection selon la revendication 34, caractérisé en ce que la commande de la modulation de l'intensité de l'émetteur de rayonnement (32) se fait par la longueur de la découpe de phase (47'') en fonction de la mesure faite à l'aide d'un détecteur de lumière supplémentaire (44).

Fig.1

Fig.2

Fig.3

Fig.4

Fig. 5

Fig.6

Fig.7

Fig. 8

Fig. 9

Fig.10

Fig.11

Fig.12